# EUROPÄISCHE PATENTANMELDUNG

(11) **EP 1 505 790 A1**
(43) Veröffentlichungstag der Anmeldung: **09.02.2005**
(21) Anmeldenummer: 03017917.0
(22) Anmeldetag: 06.08.2003
(51) Int. Cl.: H04L 29/06, G07F 19/00, G06F 1/00, G07F 7/00

(54) **System zur Autorisierung einer Transaktion durch einen Benutzer**

(71) Anmelder: Netlife Internet Consulting und Software GmbH, 20359 Hamburg (DE)
(72) Erfinder: Scheffler, Rainer, D-20459 Hamburg (DE)
(74) Vertreter: Schaeffer, Michael

(57) **Zusammenfassung**

Die vorliegende Erfindung betrifft ein System zur Autorisierung von Transaktionen durch einen Benutzer (B). Insbesondere betrifft die Erfindung ein System zur Autorisierung von Transaktionen im Internet.

Das erfindungsgemäße System ist geeignet, die gestellten Aufgaben zu erfüllen. Das System ermöglicht dem Benutzer eine unkomplizierte Handhabung unter Benutzung von in der Regel bereits vorhandenen Kommunikationsgeräten (PC, Handy, Festnetztelefon und dgl.). Bei dem System erfolgt die Freigabe der Transaktion zeitnah zur Anforderung der Transaktion durch den Benutzer, d.h. die Wartezeit ist für den Benutzer kurz. Die Sicherheit wird dadurch erhöht, dass die Anforderung der Transaktion auf einem anderen Kommunikationskanal erfolgt als die Autorisierung. Dem Benutzer wird nicht aufgegeben, für die Speicherung und Verwaltung von TANs Sorge tragen zu müssen. Es entstehen weder für den Betreiber des Systems noch für den Benutzer zusätzliche Kosten für Verbindungen, da bereits bestehende Verbindungen genutzt werden bzw. da keine kostenpflichtige Verbindung zustande kommen muss. Letzteres ist für besondere Zwecke möglich, aber nicht notwendig. Das System ist leicht skalierbar, da die Anzahl der verfügbaren TANs (Telefonnummern) problemlos angepasst werden kann. Dies kann ausserdem vollkommen transparent sowohl für den Benutzer als auch für den Betreiber des Systems erfolgen.

## Beschreibung

Die vorliegende Erfindung betrifft ein System zur Autorisierung einer Transaktion durch einen Benutzer (B). Insbesonders betrifft die Erfindung ein System zur Autorisierung von Transaktionen im Internet. Die Erfindung betrifft ferner Vorrichtungen zur Autorisierung, die im Rahmen des Systems auf Seiten des Providers und eines Autorisierungssystems selbst eingesetzt werden.

Bestehende Autorisierungsverfahren sind zum Beispiel einmalig gültige TAN-Transaktionsnummern in Papierform (TAN-Block), die ein Benutzer z.B. bei einer Bank anfordert. Die Bank wird dann eine Anzahl von TAN-Nummern zuschicken, die von ihr als gültig erfasst/gespeichert worden sind. Dies kann beispielweise per Post oder auch Email geschehen, so dass dem Benutzer eine Liste von TAN-Nummern zur Verfügung gestellt wird, von denen er jede nur ein Mal benutzen kann. Es ist üblich, dass die Bank dem Benutzer eine Anzahl neuer TAN-Nummern zuschickt, sobald alle bisherigen TAN-Nummern verbraucht und somit nicht mehr gültig sind. Der Benutzer muss selbst dafür Sorge tragen, dass er nach der Verwendung einer einzelnen TAN-Nummer diese aus seiner Liste entfernt oder anderweitig markiert, um sie nicht versehentlich erneut zu benutzen. Dies kann vergleichsweise unkomfortabel in der Handhabung sein.

Da die TAN-Nummern permanent und physikalisch beim Benutzer vorhanden sind, solange er sie nicht aufgebraucht hat, besteht die Gefahr, dass sie verloren gehen, so dass der Benutzer erst einen neuen Satz von TAN-Nummern anfordern muss, um weiterhin Transaktionen autorisieren zu können. Es wäre ferner möglich, dass sie Unbefugten in die Hände fallen. Weiterhin sind die dem Benutzer zur Verfügung stehenden TAN-Nummern in ihrer zeitlichen Gültigkeit möglicherweise unbeschränkt, was die Gefahr noch erhöht, dass sie von Unbefugten in der Zukunft benutzt werden können.

Ein anderes Verfahren zur Autorisierung sind so genannten Call-Back-Systeme. Dabei versichert sich ein angerufenes System durch einen Rückruf auf einer in der Regel gespeicherten Rufnummer, dass das anrufende System autorisiert ist und nicht ein unbefugtes System sich als berechtigt ausgibt. Da es für einen unbefugten Benutzer vergleichsweise leicht sein dürfte, sich einen Zugang zu dem berechtigten System zu verschaffen, besteht hier also die Gefahr, dass er nach dem rechtswidrig erlangten Zugriff auf das berechtigte System problemlos arbeiten kann. Denn das Call-Back-System überprüft nur, ob es sich bei einem anrufenden System um ein berechtigtes System handelt, und nicht, welcher Benutzer es gerade benutzt. Die Sicherheit, die ein solches System bietet, darf als relativ gering angesehen werden. Ausserdem ist es aufgrund des nötigen Rückrufs aufwendig, für den Betreiber aufgrund der entstehenden Verbindungskosten möglicherweise kostenintensiv, und es kann die Freigabe der Transaktion unnötig verzögern.

Das Dokument DE 19718103 A1 beschreibt den Versand von TAN-Nummern per SMS. Dabei wird die Fähigkeit drahtloser Telekommunikationsgeräte wie Handys oder Pager ausgenutzt, die in der Regel kurze alphanumerische Nachrichten (beispielsweise SMS) empfangen und anzeigen können. Der in diesem Dokument beschriebenen Erfindung nach übermittelt ein Benutzer über ein Dateneingabegerät seine Identifizierung gemeinsam mit einer Aufforderung zur Generierung einer TAN an einen Rechner. Dieser Rechner erzeugt dann eine solche TAN, z.B. durch Erzeugung einer Zufallszahl mittels eines Zufallsgenerators oder durch Entnahme einer TAN aus eine gespeicherten Datei. Die TAN wird vom Autorisierungsrechner dann an einen Empfänger übermittelt, beispielweise Funkempfänger wie Handys oder Pager, eine Mailbox, ein Telefax- oder gewöhnliches (Sprach)-Telefon. Dazu greift der Rechner auf eine Datenbank zu, in der die entsprechenden Gerätedaten (Telefon-, Handy-, Pagernummer, Mailbox etc.) mit dem Benutzer verknüpft sind, welcher die TAN angefordert hat. Diese Datenbank kann im Autorisierungsrechner selbst vorhanden sein, oder eine externe Datenbank sein, auf die der Autorisierungsrechner Zugriff hat. Der Benutzer kann nun die erhaltene TAN in sein Dateneingabegerät eingeben oder es erfolgt automatisch eine Übertragung der TAN an den Autorisierungsrechner, welcher dann die Gültigkeit der TAN überprüft und gegebenenfalls eine Transaktion freigibt. Die Autorisierung erfolgt hier also mit getrennten Übertragungswegen, einerseits über eine Verbindung des Benutzers mit dem Autorisierungsrechner (z.B. Internetverbindung), und andererseits über eine davon unabhängige Verbindung, wie z.B. über das Telefonnetz. Ausserdem sind Dateneingabegerät und das Gerät für den Empfang der TAN vom Autorisierungsrechner verschiedene Geräte. Dies stellt einen Vorteil gegenüber Call-Back-Systemen dar, bei denen lediglich die Berechtigung des Dateneingabegerätes überprüft wird.

Auch dieses System besitzt gewisse Nachteile, zur erfolgreichen Freigabe einer Transaktion sind einige Schritte nötig, d.h. es ist noch vergleichsweise kompliziert. Durch die erforderliche Übermittlung der (generierten) TAN an den Benutzer entstehen für den Betreiber des Autorisierungssystems Kosten.

Aufgabe der vorliegenden Erfindung ist es daher, ein Autorisierungssystem zur Verfügung zu stellen, welches geeignet ist, eine Transaktion durch einen Benutzer zu autorisieren. Dabei soll das verwendete Verfahren für den Benutzer relativ unkompliziert sein. Es soll die Freigabe der Transaktion zeitnah zur Anforderung einer Transaktion durch den Benutzer erfolgen, d.h. die Wartezeit zwischen Anforderung einer Transaktion und der endgültigen Freigabe derselben soll für den Benutzer kurz sein. Die Anforderung der Transaktion soll auf einem anderen Kommunikationskanal erfolgen als die Autorisierung selbst. TANs sollen nicht für lange Zeit beim Benutzer gespeichert oder notiert werden müssen, auch soll der Benutzer sich nicht darum kümmern müssen, selbst für eine Streichung oder Markierung abgelaufener bzw. bereits verbrauchter TANs zu sorgen. Es sollen weder für den Betreiber des Autorisierungssystem, noch für den Benutzer, zusätzliche Kosten durch nötige Verbindungen (z.B. Anrufe) entstehen. Das System soll leicht skalierbar sein, d.h. die Anzahl von TANs soll sich anpassen lassen. Dies soll zu jeder Zeit, und völlig transparent für Betreiber und Benutzer erfolgen können.

Die vorstehend angeführten Probleme und Aufgaben werden durch ein System, Vorrichtungen und Verfahren, wie sie in den unabhängigen Ansprüchen definiert sind, gelöst. Weitere Ausführungsformen werden in den abhängigen Ansprüchen wiedergegeben.

Gemäß einem ersten Aspekt der Erfindung wird ein Verfahren zur Autorisierung bereit gestellt. Der Autorisierungsvorgang erfolgt aus Sicht des Autorisierungssystems wie folgt:
Über eine Verbindung wird eine Anfrage empfangen, eine gewünschte Transaktion zu autorisieren. Daraufhin wird aus dem bereit gestellten Pool von Telefonnummern eine Telefonnummer NR ausgewählt und reserviert. Das Verfahren zur Auswahl der Telefonnummer NR ist so gestaltet, dass die nächste freie, d.h. momentan nicht (für andere Autorisierungsanfragen) registrierte Telefonnummer ausgewählt und reserviert wird. Ein Mehrfachzugriff ist somit möglich, d.h. an mehreren Telefonnummern kann gleichzeitig auf Anrufe gewartet werden, wobei das oben genannte Verfahren gewährleistet, dass es zu keinen Kollisionen kommt. Die gewählte Telefonnummer NR wird über die gleiche Verbindung, über die die Autorisierungsanfrage empfangen wurde, zurückübermittelt, zum Zwecke der Übermittlung an den Benutzer, welcher die Transaktion zu autorisieren wünscht. Auf der reservierten Telefonnummer NR wartet das Autorisierungssystem nun auf einen Anruf. Wird auf dieser Nummer ein Anruf registriert, erfolgt eine Autorisierung. Der Anruf muß nicht notwendigerweise angenommen werden. Er kann aber angenommen werden. Über die erfolgreiche Autorisierung wird eine Meldung geschickt, wieder über die gleiche Verbindung wie bisher. Für das Autorisierungssystem ist damit der Autorisierungsvorgang für die aktuelle Transaktion beendet, der Anruf des Benutzers kann nun abgeblockt werden (Anruf ablehnen, der Benutzer erhält jetzt statt eines Freizeichens das Besetztzeichen), so dass die Telefonnummer NR wieder freigegeben und in den Pool verfügbarer Telefonnummern zurückgeführt werden kann. Der Benutzer hat das Ende des Autorisierungsvorgangs durch das Erhalten des Besetztzeichens erkennen können.

Es wird bevorzugt, dass die Autorisierungsanfrage von einem Provider erfolgt, dass die reservierte Telefonnummer an den Provider übermittelt wird, und dass die Meldung über die erfolgreiche Autorisierung an den Provider gesendet wird.

Es wird weiterhin bevorzugt, dass für die Autorisierung einer Transaktion ein Zeitfenster T zur Verfügung gestellt wird. Innerhalb dieses Zeitfensters muss der Benutzer den Anruf unter der ihm übermittelten Nummer tätigen, um die Autorisierung vorzunehmen. Anrufe ausserhalb des Fensters werden dagegen ignoriert und es wird keine Autorisierung erteilt. Dies ermöglicht es, zu jedem Zeitpunkt Benutzer, die entsprechenden Transaktion und die zugeteilte Telefonnummer NR exakt zuzuordnen.

Es wird weiterhin bevorzugt, dass der Anruf des Benutzers unter der zugeteilten Telefonnummer nicht nur registriert wird (Erkennen des Eingangs eines Anrufs), sondern auch tatsächlich angenommen wird, d.h. eine Telefonverbindung zustanden kommt.

Es wird weiterhin bevorzugt, dass der Benutzer, der unter der ihm zugeteilten Telefonnummer NR anruft, anhand der Geräte-ID-Nummer des Telefongerätes, mit welchem er den Anruf tätigt, identifiziert wird. D.h., es wird dazu die vom Telefonanbieter des Benutzers ihm erteilte Rufnummer des entsprechenden Gerätes (Handy, Festnetztelefon etc.) ausgewertet, die eindeutig ist (in Zusammenhang mit der entsprechenden Vorwahl). Es wird natürlich nicht die Nummer ausgewertet, welche vom Benutzer als seine Rufnummer übermittelt werden kann, wie z.B. die Übermittlung der Hauptrufnummer, wenn ein Angestellter eines Call-Centers oder einer Marketingagentur o.ä. anruft, wobei in jedem Fall immer nur die selbe Hauptrufnummer übermittelt wird, da diese Nummer nicht eindeutig und ausserdem leicht manipulierbar ist.

Es wird weiterhin bevorzugt, dass die eindeutige Geräte-ID-Nummer eindeutig einem Benutzer (B) zugeordnet wird. Dies kann beispielweise über eine Datenbank im Autorisierungssystem erfolgen, in der Benutzer und Geräte-ID-Nummern entsprechend verknüpft sind. Dabei ist zu beachten, dass eine Geräte-ID-Nummer immer eindeutig einem Benutzer zugeordnet werden kann. Der Benutzer ist aber nicht identisch mit einer Person, im Falle z.B. eines Gemeinschaftskontos von Eheleuten entspräche der Benutzer (B) den beiden Personen gemeinsam. Ausserdem können natürlich auch mehrere Geräte-ID-Nummern verschiedener Geräte auf den selben Benutzer registriert sein, das können beispielsweise dessen Handy, sein Festnetztelefon, etc. Oder wie in dem Beispiel mit dem Gemeinschaftskonto das Handy #1 des Manns, das Handy #2 der Frau, usw. Es kann daher verschiedene sinnvolle Zuordnungen von Geräte-ID-Nummer, Benutzer und echter Person geben, die aber für eine einzelne Geräte-ID-Nummer immer eindeutig auf einen einzelnen Benutzer verweist.

Es wird bevorzugt, dass die Autorisierung verweigert wird, wenn der identifizierte Benutzer nicht mit dem Benutzer, welcher die Transaktion zu autorisieren wünscht, übereinstimmt.

Gemäß einem weiteren Aspekt der Erfindung wird ein Verfahren zur Autorisierung bereit gestellt. Der Autorisierungsvorgang erfolgt aus Sicht des Transaktionssystems bzw. Providers wie folgt:
Über eine Verbindung wird eine Anfrage empfangen, eine Transaktion freizugeben, beispielsweise über eine Internetverbindung, die zu dem Provider aufgebaut worden ist. Diese Transaktion muss autorisiert werden, bevor der Provider sie freigeben kann. Dazu sendet der Provider eine Autorisierungsanfrage für die gewünschte Transaktion. Ihm wird die reservierte Telefonnummer NR mitgeteilt, welche er dann über die Verbindung, die zum Provider aufgebaut ist, die also bereits besteht, übermittelt. Dann erhält der Provider die Meldung über die erfolgreiche Autorisierung. Daraufhin kann er die gewünschte Transaktion freigeben und eine Bestätigung über die erfolgte Freigabe senden, dies erfolgt wieder über die bereits bestehende Verbindung.

Es wird bevorzugt, dass die Transaktionsanfrage von einem Benutzer gesendet wird.

Es wird bevorzugt, dass die Autorisierungsanfrage an das Autorisierungssystem gesendet wird.

Es wird bevorzugt, dass die reservierte Telefonnummer vom Autorisierungssystem gesendet wird.

Es wird bevorzugt, dass die reservierte Telefonnummer dem Benutzer gesendet wird.

Es wird bevorzugt, dass die Meldung über die erfolgreiche Autorisierung vom Autorisierungssystem gesendet wird.

Es wird bevorzugt, dass die Bestätigung der Freigabe an den Benutzer gesendet wird.

Gemäß einem weiteren Aspekt der Erfindung wird ein Computerprogramm-Produkt zu Verfügung gestellt. Das Computerprogramm-Produkt schließt ladbare Programmkodeabschnitte zur Ausführung der Verfahrensoperationen gemäß einem der Verfahren zur Autorisierung ein, wenn das Computerprogramm auf einer mikroprozessor-basierenden Vorrichtung, einem Computer, einer Netzwerk-basierenden, mikroprozessor-gesteuerten Vorrichtung, einem Terminal oder Kommunikationsterminal ausgeführt wird.

Gemäß einem weiteren Aspekt der Erfindung wird ein Computerprogramm-Produkt zu Verfügung gestellt. Das Computerprogramm-Produkt schließt ein Computerprogramm mit Programmkodeabschnitten ein, die auf einem Computer-lesbaren Medium gespeichert sind, zur Ausführung der Verfahrensoperationen gemäß einem der Verfahren zur Autorisierung ein, wenn das Computerprogramm-Produkt auf einer mikroprozessor-basierenden Vorrichtung, einem Computer, einer Netzwerk-basierenden, mikroprozessor-gesteuerten Vorrichtung, einem Terminal oder Kommunikationsterminal ausgeführt wird.

Gemäß einem weiteren Aspekt der Erfindung wird ein Computer-Datensignal zur Verfügung gestellt, das in einer Trägerwelle enthalten ist, enthaltend Befehle, um einen Computer zu veranlassen, die Schritte eines der in den Ansprüchen genannten Verfahren auszuführen.

Gemäß einem weiteren Aspekt der Erfindung wird eine Vorrichtung zur Verfügung gestellt. Die Vorrichtung, die bevorzugt beim Autorisierungssystem eingesetzt wird, umfasst eine Einrichtung, um eine Autorisierungsanfrage von einem Provider zu empfangen, eine Einrichtung, welche eine Gruppe K von Telefonnummern NR zur Verfügung stellt (also beispielsweise eine Telefonanlage), eine Einrichtung, welche eine Telefonnummer NR aus der Gruppe K von Telefonnummern auswählt und reserviert, eine Einrichtung, welche die reservierte Telefonnummer K an den Provider sendet, eine Einrichtung), welche einen Anruf unter der reservierten Telefonnummer NR registriert, sowie eine Einrichtung), welche eine Meldung über die erfolgreiche Autorisierung an den Provider sendet. Die Verwendung einer Einrichtung bzw. Telefonanlage ermöglicht es, den Pool der Telefonnummern sehr flexibel zu verwalten. Es können beispielweise einzelne Nummern gesperrt werden. Die Anzahl der Nummern kann geänderten Bedürfnissen leicht angepasst werden. Dies kann vollkommen transparent für den Benutzer sowie den Provider geschehen, für die sich durch eine Änderung der Telefonnummern in der Vorgehensweise nichts ändert. Diese Handhabung ist somit wesentlich flexibler als die Verwaltung von generierten TAN-Nummern, die gespeichert, evtl. zurückgerufen bzw. als ungültig markiert werden müssen.

Es wird bevorzugt, dass die Einrichtung die Geräte-ID-Nummer des anrufenden Telefongerätes erkennt. Die Geräte-ID-Nummer ist dabei die Rufnummer, die dem Gerät bzw. Anschluss des Anrufers von seinem Telefonanbieter erteilt ist, und die vom Telefonanbieter übermittelt wird. Es ist nicht die Rufnummer, die ein Gerät des Anrufers übermitteln kann.

Es wird bevorzugt, dass eine Einrichtung vorhanden ist, welche die Geräte-ID-Nummer des anrufenden Telefongerätes eindeutig einem Benutzer (B) zuordnet. Dabei können auch mehrere Geräte-ID-Nummern auf den selben Benutzer (B) verweisen.

Es wird bevorzugt, dass die Einrichtung einen Anruf unter der reservierten Telefonnummer NR annimmt, d.h, dass eine Telefonverbindung zustande kommt.

Gemäß einem weiteren Aspekt der Erfindung wird eine Vorrichtung zur Verfügung gestellt. Die Vorrichtung aus Sicht des Providers umfasst eine Einrichtung, welche eine Transaktionsanfrage von einem Benutzer (B) erhält, eine Einrichtung, welche eine Autorisierungsanfrage für die gewünschte Transaktion an eine Autorisierungssystem sendet, eine Einrichtung, welche die vom Autorisierungssystem reservierte Telefonnummer empfängt, eine Einrichtung, welche die reservierte Telefonnummer NR an den Benutzer sendet, eine Einrichtung, welche die Meldung über die erfolgreiche Autorisierung empfängt, eine Einrichtung, welche die Transaktion freigibt, sowie eine Einrichtung, welche dem Benutzer eine Bestätigung der Freigabe sendet.

Weitere Merkmale, Vorteile und Anwendungsmöglichkeiten ergeben sich aus der nachfolgenden Beschreibung von Ausführungsbeispielen in Zusammenhang mit der Zeichnung. Dabei ist:
Figur 1 eine schematische Darstellung einer erfindungsgemäßen Vorrichtung, die im Rahmen des Systems auf der Seite des Autorisierungssystems arbeitet.
Figur 2 eine schematische Darstellung einer erfindungsgemäßen Vorrichtung, die im Rahmen des Systems auf der Seite des Providers arbeitet.
Figur 3 eine vereinfachte schematische Darstellung des erfindungsgemäßen Systems.
Figur 4 ein schematisches Flussdiagramm, welches die Schritte aufweist, die von den Einrichtungen des Systems gemäß einer erfindungsgemäßen Ausführungsform ausgeführt werden.

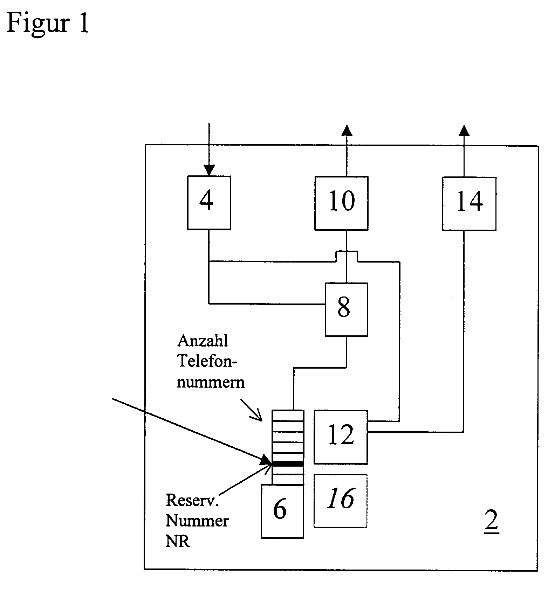

Figur 1 stellt eine Vorrichtung 2 dar, welche im Rahmen des Systems auf der Seite des Autorisierungssystems arbeitet, aufweisend die Einrichtungen 4, 6, 8, 10, 12, 14 und 16. Die Einrichtung 4 dient zum Empfang einer Autorisierungsanfrage auf einer Leitung (Telefon-, Internet-, Kabelverbindung oder dgl.). Sie ist verbunden mit einer Einrichtung 8, welcher sie Anweisungen übermitteln kann. Ferner ist sie verbunden mit einer Einrichtung 12, welcher sie Daten übermitteln kann. Das kann z.B eine zusammen mit der Autorisierungsanfrage erhaltene Benutzer-ID oder eine dem Benutzer zugeordnete Geräte-Rufnummer bzw. Geräte-ID-Nummer sein. Einrichtung 6 stellt einen Pool vonTelefonnummern zur Verfügung (also beispielsweise eine Telefonanlage). Die Einrichtung 8 ist mit ihr verbunden, um aus dem Pool eine Telefonnummer NR auszuwählen und zu reservieren. Dies geschieht auf Anweisung von Einrichtung 4 hin. Einrichtung 8 sendet die Telefonnummer NR über ihre Verbindung an Einrichtung 10, zum Zwecke der Übermittlung zurück an den Absender der Autorisierungsanfrage, beispielsweise über die Leitung, auf welcher die Autorisierungsanfrage empfangen wurde. Einrichtung 12 hat die Aufgabe, auf der reservierten Telefonnummer NR auf einen Anruf zu warten, und zwar innerhalb eines Zeitfensters T. Registriert sie einen Anruf, kann sie überprüfen, ob die Rufnummer des Anrufers einem bestimmten Benutzer entspricht. Dazu kann sie entweder die Rufnummer mit der von Einrichtung 4 gesendeten Rufnummer vergleichen. Oder sie kann sich der Einrichtung 16 bedienen, welche eine Datenbank enthält, die Benutzer anhand einer Benutzer-ID mit Rufnummern von registrierten Telefongeräten des Benutzers verknüpft. Anhand der von Einrichtung 4 gesendeten Benutzer-ID kann sie damit eine Rufnummer ermitteln, mit der sie die Rufnummer des Anrufers vergleichen kann. Im Falle, dass die Rufnummer der erwarteten Rufnummer entspricht, sendet Einrichtung 12 über eine Verbindung die erfolgreiche Autorisierung an Einrichtung 14, zum Zwecke der Übermittlung an den Absender der Autorisierungsanfrage. Diese Übermittlung kann Einrichtung 14 ebenfalls über die Leitung durchführen, auf welcher die Autorisierungsanfrage empfangen wurde. Die hier beschriebene Vorrichtung kann mittels eines Computers realisiert werden, welcher über geeignete Eingangs- und Ausgangsschnittstellen entsprechend den beschriebenen Einrichtungen verfügt und der Zugriff auf eine herkömmliche Telefonanlage besitzt. Dabei können verschiedene Einrichtungen aus dieser Beschreibung in Modulen zusammengefasst werden, auch kann die Telefonanlage in den Computer integriert werden.

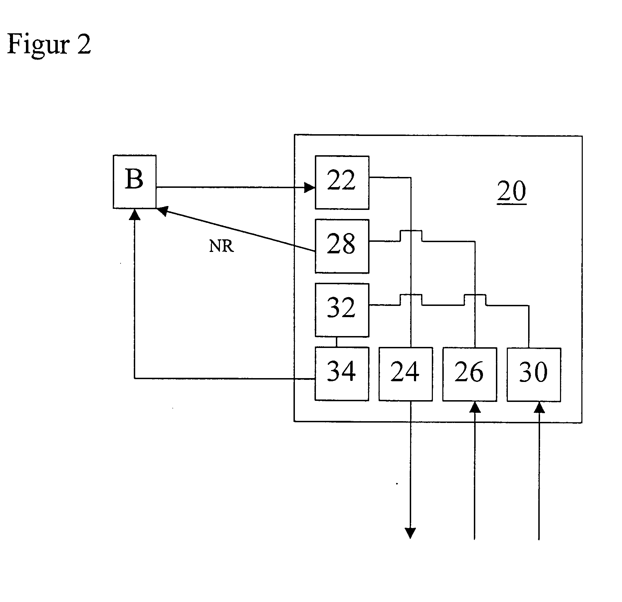

Figur 2 stellt eine Vorrichtung 20 dar, welche im Rahmen des Systems auf der Seite des Providers arbeitet, aufweisend die Einrichtungen 22, 24, 26, 28, 30, 32 und 34. Einrichtung 22 dient zum Empfang einer Anforderung einer Transaktion von einem Benutzer B, über eine Leitung (beispielsweise eine Intemetverbindung). Sie ist verbunden mit Einrichtung 24, welcher sie Anweisungen übermitteln kann. Einrichtung 24 kann auf Anforderung eine Autorisierungsanfrage bezüglich der gewünschten Transaktion senden (beispielweise über eine Kabel-, Telefon oder Internetverbindung). Einrichtung 26 dient dazu, eine reservierte Telefonnummer entgegenzunehmen, beispielsweise über die Leitung, auf der die Autorisierungsanfrage gesendet wird. Sie ist verbunden mit Einrichtung 28, über diese Verbindung kann sie die empfangene Telefonnummer an Einrichtung 28 weitergeben und Befehle senden. Einrichtung 28 dient dazu, auf Befehl hin die erhaltene Telefonnummer an den Benutzer B zu übermitteln, dies kann auf der selben Leitung geschehen, auf der vom Benutzer die Anforderung der Transaktion erfolgt. Einrichtung 30 hat die Aufgabe, auf das Eintreffen der Meldung einer erfolgreichen Autorisierung zu warten. Über eine Verbindung kann sie Einrichtung 32 informieren, welche die Transaktion daraufhin freigeben kann. Sie ist mit Einrichtung 34 verbunden, welcher sie die Freigabe melden kann, so dass Einrichtung 34 eine Bestätigung an den Benutzer schicken kann. Dies kann wiederum über die Leitung erfolgen, auf der der Benutzer die Transaktion angefordert hat. Die hier beschriebene Vorrichtung kann mittels Computers realisiert werden, welcher über geeignete Eingangs- und Ausgangsschnittstellen entsprechend den beschriebenen Einrichtungen verfügt. Dabei können verschiedene Einrichtungen aus dieser Beschreibung in Modulen zusammengefasst werden.

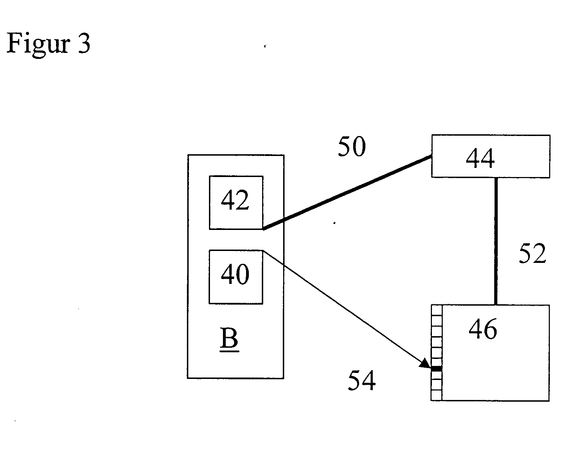

Figur 3 stellt eine vereinfachte Darstellung einer Ausführungsform der Erfindung dar. Beim Benutzer B befinden sich die Einrichtung 40, welche ein Kommunikationsgerät ist, beispielsweise ein Handy, sowie die Einrichtung 42, die dazu dient, eine bidirektionale Verbindung zu einem Provider 44 aufzubauen, also beispielsweise ein Computer mit darauf laufendem Internetbrowser. Über eine Leitung 50, also beispielsweise eine Online-Verbindung, ist der Benutzer B verbunden mit dem Provider 44. Über die bidirektionale Verbindung kann der Benutzer eine Transaktion anfordern. Der Provider 44 ist über eine weitere Leitung 52 verbunden mit dem Autorisierungssystem 46, wobei dies eine andere Internetverbindung oder beispielsweise eine direkte Verbindung mit Glasfaser- oder Kupferkabel sein kann. Diese Leitung ermöglicht eine bidirektionale Kommunikation von Provider und Autorisierungssystem. Der Provider 44 kann über diese Leitung Autorisierungsanfragen senden, und das Autorisierungssystem 46 kann die an den Benutzer zu übermittelnde Telefonnummer darüber senden. Ebenso kann es die erfolgreiche Autorisierung melden. Der Benutzer B kann sich mit seinem Kommunikationsgerät 40 mit dem Autorisierungssystem 46 verbinden, und zwar unter einer der enthaltenen Telefonnummern des Autorisierungssystems 46.

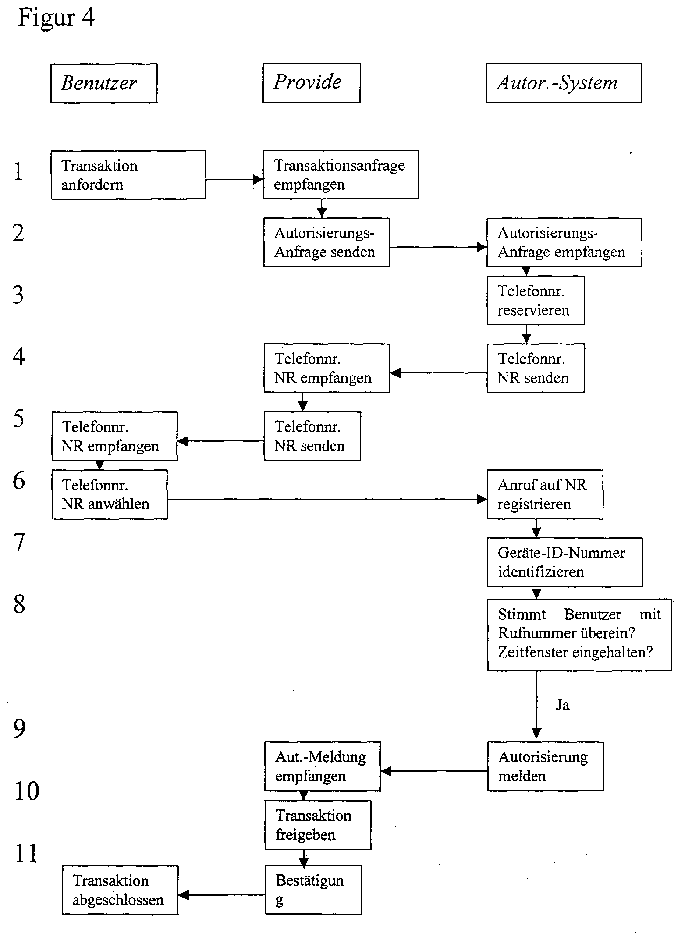

Figur 4 ist ein schematisches Flussdiagramm, welches einen Autorisierungsvorgang beschreibt. Dabei sind Benutzer, Provider und Autorisierungssystem horizontal von links nach rechts in dieser Reihenfolge gezeigt. Weiterhin sind die nacheinander erfolgenden Schritte zeilenweise angeordnet und durchnummeriert.
In Schritt 1 fordert der Benutzer eine Transaktion beim Provider an, der diese Anfrage entgegennimmt. In Schritt 2 sendet der Provider eine Autorisierungsanfrage an das Autorisierungssystem, welches die Anfrage entgegennimmt. In Schritt 3 wird vom Autorisierungssystem eine Telefonnummer NR reserviert. In Schritt 4 wird diese Telefonnummer vom Autorisierungssystem an den Provider übermittelt. In Schritt 5 sendet der Provider die Telefonnummer an den Benutzer, welcher die Nummer entgegennimmt. In Schritt 6 wählt der Benutzer die erhaltene Telefonnummer an und der Anruf wird vom Autorisierungssystem registriert. In Schritt 7 identifiziert das Autorisierungssystem die Rufnummer des eingehenden Anrufs. In Schritt 8 überprüft das Autorisierungssystem, ob die Rufnummer des Anrufers mit dem Benutzer übereinstimmt und ob der Anruf innerhalb des gesetzten Zeitfensters erfolgt ist. Wenn dies der Fall ist, wird in Schritt 9 die erfolgreiche Autorisierung an den Provider gemeldet, der diese entgegennimmt. In Schritt 10 wird vom Provider die gewünschte Transaktion freigegeben. In Schritt 11 übermittelt der Provider dem Benutzer eine Bestätigung der Freigabe seiner Transaktion. Für den Benutzer ist damit die Abwicklung der Transaktion abgeschlossen.

Eine weitere Anwendung der Erfindung im Rahmen einer Bank-Autorisierung soll im Folgenden exemplarisch beschrieben werden.

Ein Benutzer baut eine Internetverbindung zu einem Provider auf, beispielsweise einer Bank. Er will eine bestimmte Transaktion ausführen lassen, beispielweise eine Überweisung von seinem Konto auf ein anderes tätigen. Die Bank verlangt von ihm, die gewünschte Transaktion zu autorisieren. Von dem System der Bank wird bezüglich der Transaktion eine Anfrage an das Autorisierungssystem gesendet, die gewünscht Transaktion zu autorisieren. Der Benutzer ist natürlich bei der Bank bereits authentifiziert, d.h. er hat sich mit einem Passwort, einer PIN oder ähnlichem, bei der Bank angemeldet. Die Bank besitzt nun eine Datenbank, in welcher Daten des Benutzers bzw. Kunden gespeichert sind. Darunter befindet sich auch die Rufnummer eines ihm gehörenden Telefongerätes. Diese Rufnummer wird zusammen mit der Anfrage einer Autorisierung an das Autorisierungssystem gesendet. Dieses reserviert eine Telefonnummer NR und sendet diese an die Bank, welche sie ihrem Kunden übermittelt. Der Kunde muss nun innerhalb eines vom Autorisierungssystem gesetzten Zeitfensters die ihm übermittelte Nummer mit dem auf ihn bei der Bank registrierten Telefongerät anrufen. Das Autorisierungssystem erkennt dann, dass auf der reservierten Nummer ein Anruf eingeht, und im Falle, dass die Rufnummer des Anrufers mit der von der Bank gesendeten Rufnummer des Kundens übereinstimmt, und der Anruf rechtzeitig innerhalb des Zeitfensters erfolgte, erteilt es die Autorisierung. Dann meldet es der Bank die erfolgreiche Autorisierung bezüglich der übermittelten Telefonnummer NR und der Rufnummer des Kunden. Die Bank kann die gewünschte Transaktion freigeben und dem Kunden die Freigabe bestätigen. Die Autorisierung der Transaktion ist somit abgeschlossen.

Ein weiteres Ausführungsbeispiel einer Anwendung der Erfindung im Bereich kostenpflichtiger Internetseiten soll im Folgenden erläutert werden.

Ein Benutzer will eine kostenpflichtige Seite im Internet besuchen. Die Abrechnung kann mittels der vorliegenden Erfindung abgewickelt werden. Dazu sendet der Betreiber der Seite eine Anfrage an das Autorisierungssystem, mit welcher er den abzurechnenden Betrag mitteilt. Das Autorisierungssystem, welches in diesem Fall einen Pool kostenpflichtiger Telefonnummern, deren Kosten frei bestimmt werden können, enthält (beispielweise 0190-Nummern), wählt eine Telefonnummer aus, die einen Preis entsprechend der Anfrage des Seitenbetreibers besitzt. Es teilt diese Nummer dem Betreiber mit, welcher sie dem Benutzer übermittelt. Sobald der Benutzer die kostenpflichtige Telefonnummer anruft, der Anruf angenommen wird und somit der entsprechende Betrag fällig geworden ist, meldet das Autorisierungssystem dem Betreiber die erfolgte Autorisierung. Der Betreiber kann dem Benutzer die gewünschte Seite freigeben (sogenanntes "Micropayment"). Zu diesem Zweck muss der Benutzer weder dem Betreiber noch dem Autorisierungssystem in irgendeiner Weise bekannt sein, denn die Abrechnung erfolgt über die Telefonrechnung, die der Benutzer von seinem Telefonanbieter erhält.

## Patentansprüche

1. Verfahren zur Autorisierung einer Transaktion durch einen Benutzer (B), enthaltend die Schritte
- Empfang einer Autorisierungsanfrage bezüglich einer zu autorisierenden Transaktion;
- Reservierung einer Telefonnummer NR aus einer Gruppe von Telefonnummern;
- Übermittlung der reservierten Telefonnummer NR;
- Registrierung eines Anrufs unter der übermittelten Telefonnummer NR ;
- Melden einer erfolgreichen Autorisierung.

2. Verfahren gemäß einem der vorhergehend genannten Ansprüche, wobei die Autorisierungsanfrage von einem Provider gesendet wird.

3. Verfahren gemäß einem der vorhergehend genannten Ansprüche, wobei die reservierte Telefonnummer NR an den Provider gesendet wird.

4. Verfahren gemäß einem der vorhergehend genannten Ansprüche, wobei die erfolgreiche Autorisierung an den Provider gemeldet wird.

5. Verfahren gemäß Anspruch 1, wobei dem Benutzer (B) ein Zeitfenster T zur Verfügung gestellt wird, innerhalb dessen ein Anruf unter der übermittelten Telefonnummer NR erfolgen muss, um eine Autorisierung zu bewirken, wobei die Autorisierung verweigert wird, wenn ein Anruf ausserhalb dieses Zeitfensters (T) erfolgt.

6. Verfahren gemäß einem der vorhergehend genannten Ansprüche, wobei ein Anruf unter der übermittelten Telefonnummer NR angenommen wird.

7. Verfahren gemäß einem der vorhergehend genannten Ansprüche, wobei ein Anrufer durch den Anruf unter der übermittelten Telefonnummer NR anhand der Geräte-ID-Nummer des anrufenden Telefongerätes als ein bestimmter Benutzer (B) identifiziert wird.

8. Verfahren gemäß einem der vorhergehend genannten Ansprüche, wobei die Autorisierung verweigert wird, wenn der identifizierte Benutzer nicht mit dem Benutzer übereinstimmt, welcher die Transaktion zu autorisieren wünscht.

9. Verfahren zur Autorisierung einer Transaktion durch einen Benutzer (B), enthaltend die Schritte
- Empfang einer Transaktionsanfrage;
- Senden einer Autorisierungsanfrage für die gewünschte Transaktion;
- Empfang einer reservierten Telefonnummer NR;
- Übermittlung der reservierten Telefonnummer NR;
- Empfang der Meldung über eine erfolgreiche Autorisierung;
- Freigabe der Transaktion;
- Bestätigung der Freigabe.

10. Verfahren gemäß Anspruch 9, wobei die Transaktionsanfrage von einem Benutzer gesendet wird.

11. Verfahren gemäß einem der Ansprüche 9 bis 10, wobei die Autorisierungsanfrage an das Autorisierungssystem gesendet wird.

12. Verfahren gemäß einem der Ansprüche 9 bis 11, wobei mit der Autorisierungsanfrage eine Benutzer-ID an das Autorisierungssystem gesendet wird.

13. Verfahren gemäß einem der Ansprüche 9 bis 12, wobei die reservierte Telefonnummer NR vom Autorisierungssystem gesendet wird.

14. Verfahren gemäß einem der Ansprüche 9 bis 13, wobei die Übermittlung der reservierten Telefonnummer NR an den Benutzer geschieht.

15. Verfahren gemäß einem derAnsprüche 9 bis 14, wobei die erfolgreiche Autorisierung von dem Autorisierungssystem gemeldet wird.

16. Verfahren gemäß einem der Ansprüche 9 bis 15, wobei die Bestätigung der Freigabe an den Benutzer gesendet wird.

17. Verfahren gemäß einem der vorhergehend genannten Ansprüchen, wobei die Autorisierung für mehrere Transaktionen gleichzeitig gültig ist.

18. Computerprogrammprodukt, enthaltend Programmkode, um alle Schritte eines Verfahrens gemäß einem der vorhergehend genannten Ansprüche auszuführen.

19. Computerprogrammprodukt, enthaltend Programmkode, um alle Schritte eines Verfahrens gemäß einem der vorhergehend genannten Ansprüche auszuführen, wobei der Programmcode auf einem computerlesbaren Datenträger gespeichert ist.

20. Computer-Datensignal, das in einer Trägerwelle enthalten ist, enthaltend Befehle, um einen Computer zu veranlassen, die Schritte eines der in den vorhergehenden Ansprüchen genannten Verfahren auszuführen.

21. Vorrichtung (2) zur Autorisierung einer Transaktion durch einen Benutzer (B), enthaltend
- eine Einrichtung (4), welche eine Autorisierungsanfrage von einem Provider empfängt;
- eine Einrichtung (6), welche eine Gruppe von Telefonnummern zur Verfügung stellt;
- eine Einrichtung (8), welche eine Telefonnummer aus der Gruppe von Telefonnummern reserviert;
- eine Einrichtung (10), welche die reservierte Telefonnummer an den Provider sendet;
- eine Einrichtung (12), welche einen Anruf unter der reservierten Telefonnummer registriert;
- eine Einrichtung (14), welche eine Meldung über eine erfolgreiche Autorisierung an den Provider sendet.

22. Eine Vorrichtung gemäß Anspruch 21, wobei die Einrichtung (12) die Geräte-ID-Nummer des anrufenden Telefongerätes erkennt.

23. Eine Vorrichtung gemäß Anspruch 21 bis 22, wobei eine Einrichtung (16) vorhanden ist, welche die Geräte-ID-Nummer des anrufenden Telefongerätes eindeutig einem Benutzer (B) zuordnet.

24. Eine Vorrichtung gemäß Anspruch 21 bis 23, wobei die Einrichtung (12) einen Anruf unter der reservierten Telefonnummer annimmt.

25. Vorrichtung (20) zur Autorisierung einer Transaktion durch einen Benutzer (B), enthaltend
- eine Einrichtung (22), welche eine Transaktionsanfrage von einem Benutzer erhält;
- eine Einrichtung (24), welche eine Autorisierungsanfrage für die gewünschte Transaktion an ein Autorisierungssystem sendet;
- eine Einrichtung (26), welche eine vom Autorisierungssystem reservierte Telefonnummer empfängt;
- eine Einrichtung (28), welche die reservierte Telefonnummer an den Benutzer übermittelt;
- eine Einrichtung (30), welche die Meldung über eine erfolgreiche Autorisierung empfängt;
- eine Einrichtung (32), welche die Transaktion freigibt;
- eine Einrichtung (34), welche dem Benutzer eine Bestätigung der Freigabe sendet.

26. Ein System zur Autorisierung einer Transaktion durch einen Benutzer (B), **gekennzeichnet durch** eine Vorrichtung gemäß Anspruch 21 bis 24, und eine Vorrichtung gemäß Anspruch 25.
